**Europäisches Patentamt**

**European Patent Office**

**Office européen des brevets**

(11) Veröffentlichungsnummer: **0 166 885**
**A2**

(12) **EUROPÄISCHE PATENTANMELDUNG**

(21) Anmeldenummer: 85104804.1

(22) Anmeldetag: 20.04.85

(51) Int. Cl.⁴: **H 04 Q 7/04**

(30) Priorität: 30.06.84 DE 3424163

(43) Veröffentlichungstag der Anmeldung:
08.01.86 Patentblatt 86/2

(84) Benannte Vertragsstaaten:
AT CH FR GB IT LI NL SE

(71) Anmelder: ROBERT BOSCH GMBH
Postfach 50
D-7000 Stuttgart 1(DE)

(71) Anmelder: ANT Nachrichtentechnik GmbH
Gerberstrasse 33
D-7150 Backnang(DE)

(72) Erfinder: Ketterling, Hans-Peter, Dipl.-Ing.
Manfred-von-Richthofen-Strasse 11
D-1000 Berlin 42(DE)

(72) Erfinder: Budnik, Norbert, Dipl.-Ing.
Kantstrasse 23
D-7150 Backnang(DE)

(74) Vertreter: Schmidt, Hans-Ekhardt
Robert Bosch GmbH Geschäftsbereich Elektronik Patent-
und Lizenzabteilung Forckenbeckstrasse 9-13
D-1000 Berlin 33(DE)

(54) Funktelefonsystem.

(57) Es wird ein Funktelefonsystem für ein in Funkzellen aufgeteiltes Funkgebiet vorgeschlagen, bei dem neben in Kraftfahrzeugen eingebauten mobilen Funktelefonen auch in der Hand zu haltende mobile Funktelefone eingesetzt werden können. Wegen der vergleichsweise kleinen Sendeleistung von in der Hand zu haltenden mobilen Funktelefonen (H) wird jede Funkzelle (Z1) in n Empfangszellen (E11, E12 ...) aufgeteilt. Jede Empfangszelle enthält einen ortsfesten Mehrkanalfunkempfänger (BE11, BE12, ...). Die zentrale Funkstation (B1') enthält m Funksender (BS1, BS2 ...). Von der zentralen Funkstation aus werden die Mehrkanalfunkempfänger auf einen freien Sprachkanal der m Sprachkanäle umgeschaltet.

Fig. 2

EP 0 166 885 A2

14/84
EK/PLI Scht/Li
29.6.1984


ROBERT BOSCH GMBH, 7000 Stuttgart 1
ANT Nachrichtentechnik GmbH, 7150 Backnang


Funktelefonsystem


Stand der Technik


Die Erfindung betrifft ein Funktelefonsystem nach der im Oberbegriff
des Anspruchs 1 angegebenen Gattung.

Es sind Funktelefonsysteme bekannt (z. B. Funkschau, 1984, Heft 7,
Seiten 57 bis 59), bei denen ein Funkgebiet in Funkzellen mit je einer
zentralen Funkstation aufgeteilt ist. Innerhalb des gesamten Funkgebietes können mobile Funktelefone operieren und über die zentralen
Funkstationen mit Teilnehmern eines Telefonnetzes in Verbindung treten.
Ein Nachteil der bekannten Funktelefonsysteme besteht darin, daß in der
Hand zu haltende mobile Funktelefone nicht eingesetzt werden können.
Die Sendeleistung derartiger Funktelefone beträgt nämlich wegen der
geringen Batteriekapazität nur etwa 1/10 bis 1/3 der Sendeleistung eines
in einem Kraftfahrzeug eingebauten mobilen Funktelefons. Aufgrund der
Beziehung $P \sim E^2 \cdot r^2$, worin P die Sendeleistung des Funktelefons, E die
Feldstärke und r der Senderadius bzw. die Reichweite sind, kann bei 1/10
der Sendeleistung nur noch mit etwa 1/3 der Reichweite gerechnet werden.
Für die umgekehrte Übertragungsrichtung von der zentralen Funkstation zu
einem in der Hand zu haltenden mobilen Funktelefon besteht dagegen dieses
Problem nur in geringerem Maße, sofern die Antenne des Funktelefons entsprechend optimiert ist. In einem Funkversorgungsgebiet, das in der
üblichen Weise in Funkzellen bestimmter Größe aufgeteilt ist, können bisher somit neben Kraftfahrzeug-Funkstationen keine in der Hand zu haltenden
mobilen Funktelefone eingesetzt werden, ohne Einschränkungen der Reichweite
und Übertragungsqualität in Kauf nehmen zu müssen.

...

14/84        - 2 -

## Aufgabe der Erfindung

Der vorliegenden Erfindung liegt die Aufgabe zugrunde, ein Funktelefonsystem derart umzugestalten, daß bei geringem zusätzlichen Aufwand neben
in Kraftfahrzeugen eingebauten mobilen Funktelefonen auch in der Hand zu
haltende mobile Funktelefone mit vergleichsweise kleiner Sendeleistung
ohne die erwähnten Einschränkungen zum Einsatz gelangen können.

## Vorteile der Erfindung

Das erfindungsgemäße Funktelefonsystem mit den kennzeichnenden Merkmalen
des Anspruchs 1 eignet sich auch für in der Hand zu haltende mobile Funktelefone geringer Reichweite, ohne daß für diese ein höherer technischer
Aufwand nötig ist. Der Zusatzaufwand für das Gesamtsystem ist ebenfalls
sehr gering. Als weiterer Vorteil ist anzusehen, daß sich die Obertragungsqualität innerhalb des gesamten Funktelefonsystems deutlich verbessert.

Mit den in den Unteransprüchen aufgeführten Maßnahmen sind vorteilhafte
Weiterbildungen und Verbesserungen des im Anspruch 1 angegebenen Funktelefonsystems möglich. Besonders vorteilhaft ist ein Funktelefonsystem,
bei dem die zentrale Funkstation mit der Umschaltung eines Mehrkanalempfängers auf einen freien Sprachkanal gleichzeitig das diesem Sprachkanal entsprechende Mehrkanalfunksendegerät der zentralen Funksendestation
aktiviert und eine gemeinsame Koppel- und Obertragungseinrichtung der
zentralen Funkstation die Sprechverbindungswege umschaltet. Damit ist der
Vorteil verbunden, daß normale Vierdraht-Koppelfelder verwendet werden
können.

## Zeichnung

Ein Ausführungsbeispiel der Erfindung ist in der Zeichnung an Hand zweier
Figuren dargestellt und in der nachfolgenden Beschreibung näher erläutert.
Die Zeichnung zeigt in

Fig. 1    ein stark vereinfachtes Blockschaltbild
        eines bekannten Funktelefonsystems,

...

Fig. 2  ein Blockschaltbild einer erfindungsgemäßen
        Funkzelle in einer ersten Ausführungsform
        und

Fig. 3  ein Blockschaltbild einer erfindungsgemäßen
        Funkzelle in einer zweiten Ausführungsform.


Beschreibung der Erfindung

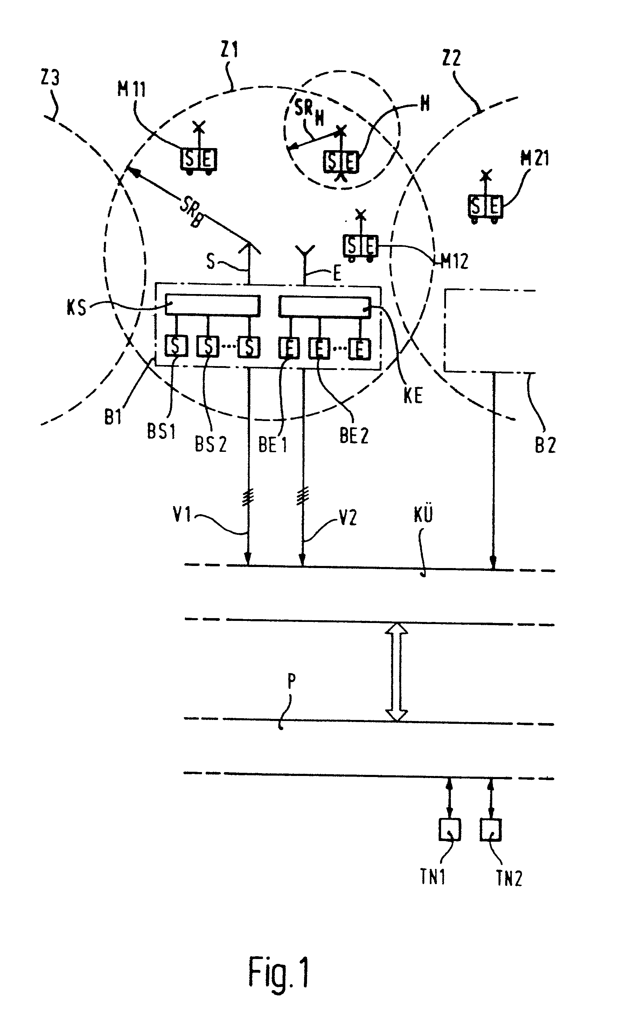

Bekannte Funktelefonsysteme weisen nach Fig. 1 mindestens ein Funkgebiet
auf, das in mehrere Funkzellen Z1, Z2 ... aufgeteilt ist, die sich teilweise überlappen. Jede Funkzelle, die in der Zeichnung der Einfachheit
halber die Form eines Kreises hat, enthält in oder nahe ihrem Mittelpunkt
eine ortsfeste zentrale Funkstation B1, B2 ... mit m Funksende- und m
Funkempfangsgeräten BS1, BS2 ..., BE1, BE2 ... entsprechend m verschiedenen Sprachkanälen. Die Funksendegeräte sind über eine gemeinsame Koppelanordnung KS mit einer Sendeantenne S und die Funkempfangsgeräte über
eine gemeinsame Koppelanordnung KE mit einer Empfangsantenne E verbunden;
andere Antennenanordnungen sind ebenfalls denkbar. Jedes Funksende- und
Funkempfangsgerät einer zentralen Funkstation steht beispielsweise über
eine Vierdrahtleitung V1, V2 ... mit einer Koppel- und Übertragungseinrichtung KÜ in Verbindung. An die zuletzt genannte Einrichtung schließt
sich ein Telefonnetz P mit Teilnehmerstationen TN1, TN2 ... an. Die Koppel-
und Übertragungseinrichtung enthält in bekannter Weise Mittel zum Feststellen der Übertragungsqualität, zum Umschalten der zentralen Funkstation
beim Zellenwechsel und dergleichen.

Innerhalb einer Funkzelle, zum Beispiel der Funkzelle Z1, operieren mobile
Funktelefone M11, M12 ..., die vorzugsweise in Kraftfahrzeugen eingebaut
sind. Die Sendeleistungen der Funksende- und Funkempfangsgeräte BS1,
BS2 ..., BE1, BE2 ... der zentralen Funkstationen B1, B2 ... sowie der
mobilen Funktelefone M11, M12, M21 ... sind derart bemessen, daß ein einwandfreier Funkverkehr in beiden Richtungen möglich ist. In Fig. 1 ist der
Senderadius $SR_B$ der ortsfesten Funkstation B1 eingetragen, der gleichzeitig
dem Radius der Funkzelle Z1 entspricht.

...

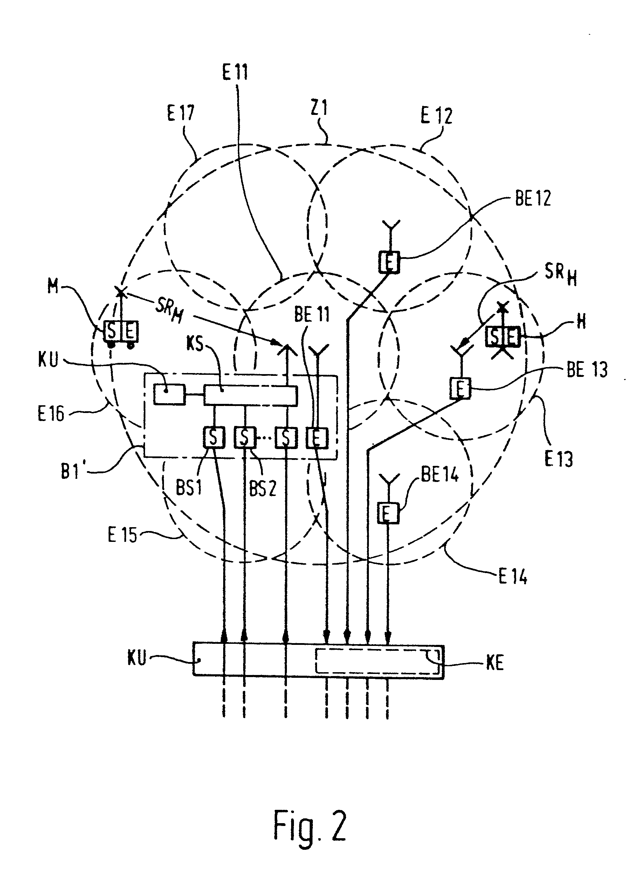

Besteht nun der Wunsch, in das Funktelefonsystem auch in der Hand zu
haltende mobile Funktelefone H einzubeziehen, so ergibt sich wegen der
geringeren Sendeleistung dieser Geräte ein kleinerer Senderadius $SR_H$;
vgl. Fig. 1. Nach der Erfindung wird deshalb jede Funkzelle, zum Beispiel die Funkzelle Z1 in Fig. 2, in n Empfangszellen, zum Beispiel
E11 ... E 17, aufgeteilt. In jeder Empfangszelle befindet sich in
zentraler Lage ein ortsfester Mehrkanalempfänger BE11, BE12 ... Eine
zentrale Funkstation B1' enthält im Vergleich zu der zentralen Funkstation B1 in Fig. 1 m/n ortsfeste Mehrkanalfunkempfänger, in Fig. 2
den Empfänger BE11 und m ortsfeste Funksender BS1, BS2 ... Der Senderadius $SR_H$ der in der Hand zu haltenden mobilen Funktelefone H reicht
dann in jedem Fall aus, einen der ortsfesten Mehrkanalfunkempfänger,
zum Beispiel BE13, zu erreichen. Die ortsfeste zentrale Funkstation B1'
ist mit einer Kanalumschalteinrichtung KU versehen, die dafür sorgt,
daß die Mehrkanalfunkempfänger, zum Beispiel der Funkempfänger BE12,
von der zentralen Funkstation B1' aus auf jeweils einen der m möglichen
Sprachkanäle umgeschaltet werden. Wechselt ein mobiles Funktelefon H
von einer Empfangszelle in eine benachbarte Empfangszelle, zum Beispiel
von E13 nach E12, so schaltet die Kanalumschalteinrichtung KU den Empfänger BE12 auf einen passenden Funkkanal um und nimmt gleichzeitig eine
Umschaltung der Kanalsprechwege in dem Empfangskoppelfeld KE vor. Die
Umschaltungen gehen so schnell vor sich, daß die Teilnehmer den Umschaltvorgang kaum wahrnehmen.

In einer alternativen Ausführungsform des erfindungsgemäßen Funktelefonsystems schaltet die Kanalumschalteinrichtung KU nicht nur die Mehrkanalfunkempfänger auf einen bestimmten Funkkanal, sondern sie schaltet auch
gleichzeitig den auf den betreffenden Funkkanal abgestimmten zentralen
Funksender BS1, BS2 ... um. Die ortsfesten Mehrkanalfunkempfänger BE11,
BE12 ... und die ortsfesten Funksender BS1, BS2 ... stehen vorzugsweise
über je eine Zweidrahtleitung mit der Koppel- und Übertragungseinrichtung KÜ (vgl. Fig. 1) in Verbindung.

                                                              ...

In der Praxis haben in der Hand zu haltende mobile Funktelefone H nur etwa 1/10 der Sendeleistung von in Kraftfahrzeugen eingebauten mobilen Funktelefonen. Wie bereits eingangs erwähnt, beträgt damit der Senderadius der in der Hand zu haltenden mobilen Funktelefone nur etwa 1/3 des Senderadius eines in einem Kraftfahrzeug eingebauten mobilen Funktelefons, woraus sich ergibt, daß die Empfangszellen E11, E12 ... ebenfalls nur etwa 1/10 der Fläche der normalen Funkzellen Z1, Z2 ... aufweisen dürfen.

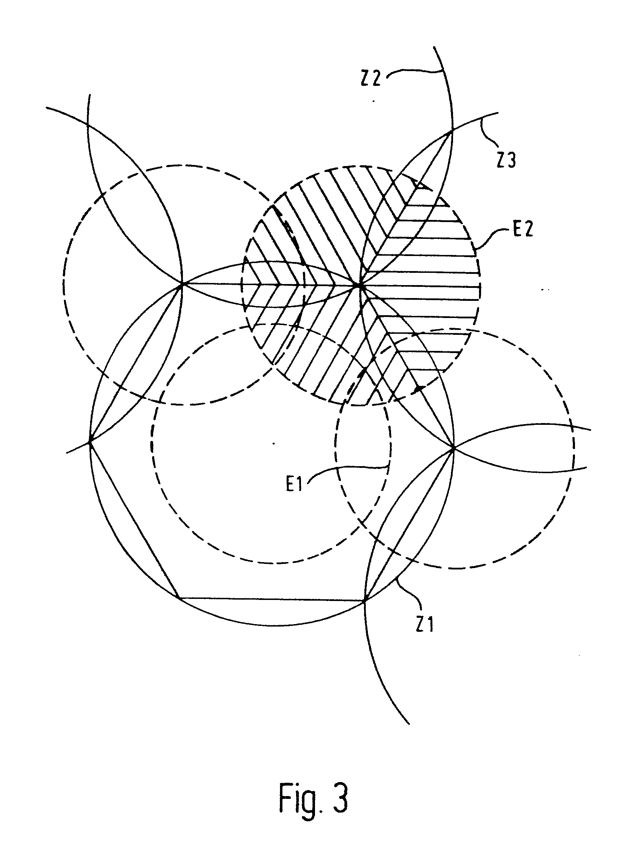

Bei ausgedehnten Funktelefonnetzen werden die größeren Sendezellen von einem Netz kleinerer Empfangszellen in größerer Anzahl überlagert. In den Randgebieten der Sendezellen können den Empfangszellen E auch mehrere Sendezellen, zum Beispiel Z1, Z2, Z3, zugeordnet sein; vgl. Fig. 3, Empfangszelle E2 und Sendezellen Z1, Z2, Z3.

14/84
EK/PLI Scht-Li
29.6.1984


ROBERT BOSCH GMBH, 7000 Stuttgart 1
ANT Nachrichtentechnik GmbH, 7150 Backnang


Ansprüche

1. Funktelefonsystem für ein in Funkzellen aufgeteiltes Funkgebiet, das je Funkzelle eine zentrale Funkstation mit auf m verschiedene Sprachkanäle abgestimmten Funkgeräten aufweist und in welchem mehrere mobile Funktelefone operieren, die über die zentrale Funkstation und mit dieser verbundene Koppel- und Übertragungseinrichtungen mit Teilnehmern eines drahtgebundenen Telefonnetzes in Verbindung treten können, dadurch gekennzeichnet, daß bei einem Einsatz von in der Hand zu haltenden mobilen Funktelefonen (H) vergleichsweise kleiner Sendeleistung jede Funkzelle (Z1) in n Empfangszellen (E11, E12 ...) mit je einem ortsfesten Mehrkanalfunkempfänger (BE11, BE12 ...) aufgeteilt ist, daß die zentrale Funkstation (B1') m Funksender (BS1, BS2 ...) enthält und daß von der zentralen Funkstation aus die Mehrkanalfunkempfänger wahlweise auf einen freien Sprachkanal der m Sprachkanäle umschaltbar sind.

2. Funktelefonsystem nach Anspruch 1, dadurch gekennzeichnet, daß die zentrale Funkstation (B1') mit der Umschaltung eines Mehrkanalempfängers (BE11) auf einen freien Sprachkanal gleichzeitig das diesem Sprachkanal entsprechende Mehrkanal-Funksendegerät (BS1) der zentralen Funksendestation aktiviert und daß eine gemeinsame Koppel- und Übertragungseinrichtung (KÜ) der zentralen Funkstation die Sprechverbindungswege umschaltet.

3. Funktelefonsystem nach Anspruch 1, dadurch gekennzeichnet, daß einzelnen Empfangszellen (E1) mehrere Sendezellen (Z1, Z2, Z3) zugeordnet sind.

Fig.1

Fig. 2

Fig. 3